## Europäisches Patentamt
## European Patent Office
## Office européen des brevets

(19)

(11) Veröffentlichungsnummer : **0 134 882**
**B1**

(12) **EUROPÄISCHE PATENTSCHRIFT**

(45) Veröffentlichungstag der Patentschrift :
25.05.88

(21) Anmeldenummer : 84103635.3

(22) Anmeldetag : 02.04.84

(51) Int. Cl.⁴ : **C 01 B 33/32**

(54) Lösen von Natriumsilikat-Stückenglas unter Verwendung von Dünnlaugen.

(30) Priorität : 09.04.83 DE 3312846

(43) Veröffentlichungstag der Anmeldung :
27.03.85 Patentblatt 85/13

(45) Bekanntmachung des Hinweises auf ·die Patenterteilung : 25.05.88 Patentblatt 88/21

(84) Benannte Vertragsstaaten :
AT BE CH DE FR GB IT LI NL SE

(56) Entgegenhaltungen :
EP-A- 0 066 214
CHEMICAL ABSTRACTS, Band 99, Nr. 6, 1983, Seite 123, Nr. 40620c, Columbus, Ohio, US; & SU - A - 1 013 404 (VIDENIN, S.A. et al.) 23.04.1983

(73) Patentinhaber : Henkel Kommanditgesellschaft auf Aktien
Postfach 1100 Henkelstrasse 67
D-4000 Düsseldorf-Holthausen (DE)

(72) Erfinder : Christophliemk, Peter, Dr.
Rudolf-Breitscheid-Strasse 61
D-4000 Düsseldorf 13 (DE)
Erfinder : Novotny, Rudolf, Dr.
Am Rittersberg 14
D-4000 Düsseldorf 13 (DE)

EP 0 134 882 B1

Jouve, 18, rue St-Denis, 75001 Paris, France

0 134 882

## Beschreibung

Die Erfindung betrifft die Herstellung wäßriger konzentrierter Natriumsilikatlösungen unter Verwertung von sogenannten Dünnlaugen in einem Zweistufenverfahren, in welchem Natriumsilikatglas zunächst in alkalifreiem Wasser auf einen $SiO_2$-Gehalt in Lösung von mindestens 20 Gewichtsprozent angelöst und nach Verdünnung mit Dünnlauge dann unter Zugabe von weiterem Natriumsilikatglas bis zum Erreichen der geforderten $SiO_2$-Konzentration von mindestens 26 Gewichtsprozent weitergelöst wird.

Technische Natriumsilikatlösungen — im folgenden als « Wasserglas »-Lösungen bezeichnet — werden bevorzugt durch Lösen von festem Natriumsilikatglas — im folgenden als « Schmelzglas » bezeichnet — in Wasser bei 135 bis 155 °C unter zugehörigem autogenen Druck hergestellt und weisen dann bevorzugt hohe $SiO_2$-Konzentrationen von 26 bis 30 Gewichtsprozent auf.

Das Festglas für diese wäßrigen Lösungen wird technisch überwiegend unter Einsatz von Soda als Alkalikomponente sowie mit Gewichtsverhältnissen $SiO_2/Na_2O$ — im folgenden als « Verhältnis » bezeichnet — von 3,0 bis 3,5, besonders bevorzugt von 3,3 bis 3,4, erschmolzen.

Zur Herstellung wäßriger Lösungen mit demgegenüber niedrigen Verhältnissen von beispielsweise $SiO_2/Na_2O$ von bis zu 2,0 werden nach bisherigem Stand der Technik entweder spezielle und aufwendige alkalische Schmelzgläser mit entsprechend niedrigeren Verhältnissen von bis zu = 2,0 für den Löseprozeß erschmolzen und anschließend gelöst oder aber leicht zugängliche Festglasqualitäten mit Verhältnissen 3,3 bis 3,4 in üblicher Weise gelöst, die Wassergläser mit möglichst konzentrierter Natronlauge auf das gewünschte resultierende Verhältnis eingestellt und diese abgerichtete wäßrige Lösung anschließend auf die geforderten $SiO_2$-Konzentrationen eingedampft. Die Verwendung von Abfall- beziehungsweise Dünnlaugen mit geringem Natronlaugengehalt hierbei erhöht die Eindampfkosten in direkter Abhängigkeit vom Alkaligehalt der verwendeten Lauge und verringert darüber hinaus die Raum-/Zeit-Ausbeute des Löse-/Eindampf-Verfahrens signifikant.

Nach dem bisherigen Stand der Technik war es nicht möglich, Schmelzglas statt in alkalifreiem Wasser direkt in « Dünnlauge », das heißt in Natronlauge mit einem NaOH-Gehalt von 5 bis 20 Gewichtsprozent (bevorzugt 10 bis 14 Gewichtsprozent) zu lösen. In Abhängigkeit vom vorgelegten NaOH-Gehalt des « Lösewassers » führt Laugenzusatz zu einer signifikanten Verlängerung der Lösezeit, ohne daß jedoch technisch erforderliche Konzentrationen von etwa 15 bis 20 % $SiO_2$ in akzeptablen Reaktionszeiten (doppelte bis dreifache der sonst üblichen Lösezeit ohne Alkalizusatz) erreicht wurden. Darüber hinaus führt Laugenzusatz zu einem betriebliche Störungen während des Löseprozesses hervorrufenden Verklumpen des Festglases.

Aufgabe der vorliegenden Erfindung ist es daher, ein Verfahren zur Herstellung konzentrierter alkalischer Natriumsilikatlösungen unter Verwertung des Alkaligehaltes verdünnter Dünn- beziehungsweise Abfallaugen zu entwickeln, bei dem die vorstehend aufgezeigten Nachteile vermieden werden. Zusätzlich betrifft diese Aufgabenstellung die Erzielung einer möglichst hohen Raum-/Zeit-Ausbeute bei einem möglichst geringen Energieaufwand innerhalb der Löseprozeße bei maximaler Verwertung verdünnter Abfallaugen.

Überraschenderweise wurde nun gefunden, daß sich Schmelzglas trotz Alkalizusatz in Form von Dünnlauge von bis zu 15 kg $Na_2O$ pro 100 kg in Lösung gehendes $SiO_2$ jedoch dann ohne merkliche Beeinträchtigung der Lösegeschwindigkeit löst, wenn das Schmelzglas zuvor mit alkalifreiem Wasser bis zu einer Konzentration von zumindest 20 bis höchstens 30 Gewichtsprozent $SiO_2$ in Lösung aufgelöst wurde.

Gegenstand der Erfindung ist somit ein Verfahren zur Herstellung wäßriger Natriumsilikatlösungen mit einem Gehalt von mindestens 26 Gewichtsprozent $SiO_2$ und einem Gewichtsverhältnis $SiO_2 : Na_2O$ von 2,0 bis 3,0 und bevorzugt von 2,7 bis 2,9 unter Verwendung von Dünnlauge mit höchstens 20 und bevorzugt unter 14 Gewichtsprozent NaOH sowie von Natriumsilikatfestglas mit einem Gewichtsverhältnis $SiO_2 : Na_2O$ von 3,0 bis 3,5 und bevorzugt von 3,0 bis 3,4 das dadurch gekennzeichnet ist, daß

a) das Festglas zunächst in alkalifreiem Wasser bei 135 bis 155 °C und zugehörigem autogenen Dampfdruck des Wassers bis zum Erhalt einer wäßrigen Natriumsilikatlösung mit mindestens 20 bis höchstens 30 Gew.-% $SiO_2$ angelöst,

b) nachfolgend dann die Dünnlauge in einer solchen Menge hinzugegeben wird, daß in der Mischung der beiden Komponenten Gewichtsverhältnisse $SiO_2 : Na_2O$ von 1,8 bis 2,6 mit einem von der Konzentration der Dünnlauge abhänigen Feststoffgehalt resultieren,

c) in einem zweiten Löseschritt dann in dieser Mischung weiteres Natriumsilikatfestglas gelöst wird, bis eine Konzentration von mindestens 23 % $SiO_2$ in Lösung erreicht ist.

Die wie oben beschrieben erhaltene Natriumsilikatlösung kann anschließend unter Wärmerückgewinn abgetrennt und gegebenenfalls filtriert und mit weiterer Dünnlauge versetzt werden.

Das erfindungsgemäße Verfahren ist in nach dem Stand der Technik ausgerüsteten Löseanlagen ausführbar. Der Lösereaktor kann beispielsweise als ein um eine Langsachse rotierender, axial aufgehängter Behälter ausgelegt sein oder auch als statischer Behälter, bei dem durch Umpumpen der Flüssigphase durch das auf Siebböden liegende Festglas für eine hinreichende Durchmischung des Behälterinhaltes gesorgt wird. In Hinblick auf einen möglichst niedrigen Energieverbrauch für den

2

Löseprozeß sind derartige Lösebehälter nach dem Stand der Technik mit Wärmerückgewinnungsanlagen ausgestattet.

Bei dem erfindungsgemäßen Verfahren wird in der ersten Stufe zunächst der Lösebehälter mit bevorzugt heißem Stückenglas in hohem Überschuß von bis zu 200 %, bezogen auf die resultierende Wasserglaslösung, gefüllt. Danach erst wird wenig kaltes Wasser zum Aufsprengen des heißen Stückenglases und unmittelbar anschließend dann die Hauptmenge an über Wärmerückgewinn aufgeheiztem Lösewasser mit bis zu 100 °C unter Normaldruck eingegeben und der Reaktor geschlossen. In Hinblick auf einen möglichst geringen technischen Aufwand und hohe Raum-/Zeit-Ausbeuten wird das Lösen technisch bei 135-155 °C, bevorzugt bei 140-150 °C, und zugehörigem autogenen Dampf des Wassers durchgeführt. Bei Vorlage von heißem Stückenglas und Verwendung von hauptsächlich heißem Lösewasser braucht wegen der Exothermie des Löseprozesses dem Reaktionsgemisch nur noch wenig zusätzliche Heizenergie — beispielsweise 4 bar-Dampf — zugeführt zu werden, um die bevorzugte Lösetemperatur von 140 bis 150 °C einzustellen. Nach etwa 60 bis 90 Minuten dauerndem Lösen bei dieser Temperatur weist die wäßrige Lösung bereits Gehalte von 20 bis 30 % $SiO_2$ sowie — entsprechend den im eingesetzten Festglas vorliegenden Verhältnissen — zugehörige Alkaligehalte auf.

Bei den bisherigen Löseverfahren nach dem Stand der Technik wird diese Lösung auf Normaldruck entspannt, das heißt auf etwa 100 °C abgekühlt, indem sie durch Eigendruck in eine geeignete Vorrichtung überführt wird, wobei der sich bei Entspannung bildende Wasserdampf dann Lösewasser für einen nachfolgenden Löseprozeß auf bis zu 100 °C aufheizt. Dieses abgekühlte Wasserglas wird je nach vorgesehenem Verwendungszweck anschließend gegebenenfalls auf das erwünschte Verhältnis von $SiO_2/Na_2O$ eingestellt und/oder filtriert und/oder auf höheren Feststoffgehalt eingedampft.

Bei dem erfindunsgemäßen Verfahren dagegen wird nach Erreichen des angestrebten $SiO_2$-Gehaltes in Lösung die Dünnlauge in den Reaktor und damit direkt in die 135 bis 155 °C heiße Wasserglaslösung gepumpt und die Reaktion in zweiter Stufe des erfindungsgemäßen Löseverfahrens fortgesetzt, bis wiederum eine hinreichend konzentrierte Wasserglaslösung vorliegt. Daran können sich dann in üblicher Weise weitere Behandlungsschritte wie Entspannen, Filtration, Abrichtung oder Eindampfung in Abhängigkeit vom angestrebten Verwendungszweck der Wasserglaslösung anschließend.

Je nach vorliegenden betrieblichen Anlagen kann es jedoch technisch sinnvoll sein, die Herstellung der vorzulegenden Wasserglaslösung einerseits und das Nachlösen andererseits in unterschiedlichen Lösereaktoren durchzuführen, die beiden Verfahrensstufen also auch räumlich zu trennen, zumal wenn je nach Ansatz- und Konzentrationsbedingungen für beide Löseprozeße unterschiedliche Werkstoffe optimal sind. So kann also die vorzulegende Wasserglaslösung beispielsweise in üblicher Weise in stehenden Lösern bereitet und dann nach Entspannung auf Normaldruck unter Energierückgewinnung in einen anderen, beispielsweise rotierenden Lösereaktor überführt, dort bei Normaldruck unter Einsparung von Druckpumpen mit Dünnlauge versetzt und in dem rotierenden Löser unter Zusatz von heißem Festglas bei wiederum 135 bis 155 °C, bevorzugt bei 140 bis 150 °C, so lange behandelt werden, bis das erwünschte Verhältnis von $SiO_2 : Na_2O$ erreicht ist.

## Beispiele

Der Anmeldungsgegenstand wird durch die nachfolgenden Beispiele näher erläutert, ohne darauf beschränkt zu sein.

Die Beispiele wurden im großtechnischen Rahmen unter Verwendung gleichbleibender Rohstoffe durchgeführt. Als Schmelzglas wurde eine technische Natriumsilikat-Stückenglasqualität der Zusammensetzung $Na_2O \cdot 3,35\ SiO_2$ mit weniger als 1 Gewichtsprozent Gesamtverunreinigung eingesetzt. Als Wasserglaslösung (außer im Beispiel 8) wurde eine wäßrige Lösung dieses Schmelzglases mit 8,0 % $Na_2O$ und 26,8 % $SiO_2$ eingesetzt. Die im Rahmen der Beispiele zu verwendende Abfall-Lauge wies 14,0 Gewichtsprozent NaOH auf. Niedrigere Natronlaugekonzentrationen der Dünnlauge wurden jeweils durch Zugabe von enthärtetem Wasser eingestellt.

Die Komponenten wurden heiß (Festglas mit etwa 200 °C, Dünnlauge und Wasserglaslösung mit etwa 70 bis 95 °C) eingebracht.

Bei allen Beispielen wurde durch direktes Einblasen von Wasserdampf in das Reaktionsgemisch eine Temperatur von 145 ± 2 °C erzielt. Nach jeweils 120 Minuten Reaktionsdauer wurden Proben der resultierenden Lösungen entnommen und bezüglich ihres Gehaltes an $Na_2O$ und $SiO_2$ analysiert.

Die Einsatzmengen an Einzelkomponenten sowie die Zusammensetzungen der Mischungen sind in der Tabelle 1 zusammengefaßt. In Tabelle 2 sind Ausbeuten und Zusammensetzungen der nach hydrothermaler Behandlung resultierenden Lösungen aufgeführt.

Die Beispiele 2 bis 5 (1 = Vergleichsbeispiel) wurden in einem mit Stahlplatten ausgekleideten Reaktor, der mit 6 Umdrehungen pro Minute um seine Längsachse rotiert und ein Fassungsvermögen von 24 m$^3$ aufweist, ausgeführt. Hierbei wurden die angegebenen Mengen an Stückenglas und Flüssigkeitskomponenten — einschließlich der Dünnlauge — bei Normaldruck vor Aufheizen des Reaktionsgemisches über eine Einfüllöffnung in den Reaktor gegeben, dieser dann verschlossen, in Rotation versetzt und aufgeheizt.

Für die Beispiele 6 bis 8 wurde ein statischer, mit einem Siebboden versehener Behälter mit einem Fassungsvermögen von 25 m$^3$ eingesetzt. Bei diesem Reaktortyp liegt das Stückenglas auf dem

**0 134 882**

Siebboden und die Flüssigphase wird mittels Umpumpen durch das Stückenglas hindurchgeführt.

Bei den Beispielen 6 und 7 wurden — wie vorhergehend — alle Komponenten bei Normaldruck vor Aufheizen des Reaktionsgemisches in den Reaktor gefüllt.

Im Beispiel 8 wurde abweichend davon jedoch zunächst die Wasserglaslösung ohne Zusatz von Dünnlauge hergestellt. In diese Lösung wurde dann ohne zwischenzeitliches Abkühlen und gegen den Druck des Reaktionsgemisches die Dünnlauge in den Reaktor gepumpt. Entsprechend wurde von vornherein eine wesentlich größere Menge Festglas eingebracht. Nach 60 minütiger Lösedauer (140 bis 145 °C) wurde auf diese Weise eine Wasserglaslösung mit 7,5 % $Na_2O$ und 25,1 % $SiO_2$ erzielt. Nach Zupumpen der Dünnlauge wurde wie bei den anderen Beispielen eine weitere Reaktionszeit von 120 Minuten zum Nachlösen von Stückenglas beibehalten.

Beispiel 1 (Vergleichsbeispiel) zeigt, daß bei Verwendung auch sehr verdünnter Lauge mit nur 4 % NaOH als « Lösewasser » in Abwesenheit gelösten Silikats eine wesentliche Löslichkeitsgrenze besteht. Die nach 120 Minuten erzielte Wasserglaslösung weist einen technisch nicht akzeptablen niedrigen Feststoffgehalt auf, die Raum/Zeit-Ausbeute ist (verglichen mit der ersten Lösestufe bei nur 60 Minuten Dauer im Beispiel 8) äußerst niedrig.

Die Beispiele 2 bis 8 machen daher den Vorteil des erfindungsgemäßen Verfahrens deutlich.

Alle Prozentangaben sind Gewichtsprozent.

(Siehe Tabellen Seite 5 ff.)

4

0 134 882

Tabelle 1 : Ansatzbedingungen

| Bei-spiel Nr. | Einsatzmengen in 1 000 kg[a] | | | | Dünn-laugen-konz.[b] | Flüssig-Gemisch | | |
|---|---|---|---|---|---|---|---|---|
| | Fest-glas | Wasserglas-lösung | Lauge (14%NaOH) | enth. Wasser | | Menge (in t) | Gew.-% $SiO_2$ | Gew.-Verh. $SiO_2/Na_2O$ |
| 1 | 10 | 0 | 3,43 | 8,57 | 4,0 | 12,0 | d) | d) |
| 2 | 6 | 10,0 | 4,49 | 1,79 | 10,0 | 16,3 | 16,6 | 2,1 |
| 3 | 6 | 10,0 | 2,58 | 1,03 | 10,0 | 13,6 | 19,8 | 2,5 |
| 4 | 6 | 10,0 | 6,45 | 0 | 14,0 | 16,5 | 16,4 | 1,8 |
| 5 | 6 | 10,0 | 2,20 | 3,97 | 5,0 | 16,2 | 16,7 | 2,6 |
| 6 | 8 | 12,0 | 4,13 | 1,65 | 10,0 | 17,8 | 18,2 | 2,3 |
| 7 | 8 | 12,0 | 3,10 | 1,22 | 10,0 | 16,3 | 19,8 | 2,5 |
| 8[c] | 15 | 0 | 4,67 | 8,90 | 14,0 | 19,5 | 19,1 | 2,3 |

[a] Zusammensetzung der Komponenten wie beschrieben.

[b] Rechnerische Konzentration im Gemisch Abfall-Lauge/enthärtetes Wasser in Gew.-% NaOH.

[c] Aus dem vorgelegten alkalifreien Lösewasser (zuzüglich etwa 1 100 kg Dampfkondensat) resultierten 14,8 t Wasserglaslösung (7,5 % $Na_2O$/25,1 % $SiO_2$), in welche die Lauge unverdünnt eingepumpt wurde.

[d] zu Reaktionsbeginn kein $SiO_2$ in Lösung.

Tabelle 2 : Ergebnisse

| Bei-spiel Nr. | Mengen in 1.000 kg | | Kon-[b) densat | Zusammensetzung der nach 120 Minuten/140 bis 145°C resultierenden Lösung[c) | | |
|---|---|---|---|---|---|---|
| | Aus-beute[a) | Festglas[b) nachgelöst | | % Na$_2$O | % SiO$_2$ | Gew.-Verh. SiO$_2$/Na$_2$O |
| 1 | 14,3 | 0,9 | 1,4 | 4,05 | 4,85 | 1,20 |
| 2 | 21,0 | 3,2 | 1,5 | 9,63 | 24,27 | 2,52 |
| 3 | 17,7 | 2,9 | 1,2 | 9,87 | 27,83 | 2,82 |
| 4 | 20,9 | 2,8 | 1,6 | 10,26 | 23,29 | 2,27 |
| 5 | 20,8 | 3,0 | 1,6 | 8,31 | 24,10 | 2,90 |
| 6 | 23,2 | 3,7 | 1,7 | 9,74 | 26,30 | 2,70 |
| 7 | 21,0 | 3,4 | 1,3 | 9,89 | 27,89 | 2,82 |
| 8 | 23,3 | 3,5 | 0,3 | 10,35 | 27,53 | 2,66 |

a) Gesamtmenge an Flüssigkomponenten nach 120 Minuten/140 bis 145 °C.

b) aus Mengen- und Konzentrationsänderungen berechnet.

c) analytisch ermittelt.

**Patentanspruch**

Verfahren zur Herstellung wäßriger Natriumsilikatlösungen mit einem Gehalt von mindestens 26 Gewichtsprozent $SiO_2$ und einem Gewichtsverhältnis $SiO_2 : Na_2O$ von 2,0 bis 3,0 und unter Verwendung von Dünnlauge mit höchstens 20 Gewichtsprozent NaOH sowie von Natriumsilikatfestglas mit einem Gewichtsverhältnis $SiO_2 : Na_2O$ von 3,0 bis 3,5, dadurch gekennzeichnet, daß

a) das Festglas zunächst in alkalifreiem Wasser bei 135 bis 155 °C und zugehörigem autogenen Dampfdruck des Wassers bis zum Erhalt einer wäßrigen Natriumsilikatlösung mit mindestens 20 bis höchstens 30 Gewichtsprozent $SiO_2$ angelöst,

b) nachfolgend dann die Dünnlauge in einer solchen Menge hinzugegeben wird, daß in der Mischung der beiden Komponenten Gewichtsverhältnisse $SiO_2 : Na_2O$ von 1,8 bis 2,6 mit einem von der Konzentration der Dünnlauge abhängigen Feststoffgehalt resultieren,

c) in einem zweiten Löseschritt dann in dieser Mischung weiteres Natriumsilikatfestglas gelöst wird, bis eine Konzentration von mindestens 23 % $SiO_2$ in Lösung erreicht ist.

**Claim**

A process for the production of aqueous sodium silicate solutions containing at least 26 % by weight of $SiO_2$ and having a ratio by weight of $SiO_2$ to $Na_2O$ of from 2.0 to 3.0 using thin liquor containing at most 20 % by weight of NaOH and solid sodium silicate glass having a ratio by weight of $SiO_2$ to $Na_2O$ of from 3.0 to 3.5, characterized in that

a) the solid glass is first predissolved in alkali-free water at 135 to 155 °C and under the corresponding autogenous vapor pressure of the water until an aqueous sodium silicate solution containing at least 20 to at most 30 % by weight of $SiO_2$ is obtained,

b) the thin liquor is then added in such a quantity as to produce ratios by weight of $SiO_2$ to $Na_2O$ of from 1.8 to 2.6 in the mixture of the two components with a solids content dependent upon the concentration of the thin liquor,

c) after which more solid sodium silicate glass is dissolved in this mixture in a second dissolving step until a concentration of at least 23 % of $SiO_2$ in solution is reached.

**Revendication**

Procédé de préparation de solutions aqueuses de silicate de sodium contenant au moins 26 % en poids de $SiO_2$ et ayant un rapport pondéral $SiO_2 : Na_2O$ de 2,0 à 3,0 en utilisant une lessive fluide contenant, au maximum, 20 % en poids de NaOH, ainsi que du verre solide de silicate de sodium présentant un rapport pondéral $SiO_2 : Na_2O$ de 3,0 à 3,5, caractérisé en ce que :

a) on soumet le verre solide à une approche de dissolution tout d'abord dans de l'eau exempte d'alcali à une température de 135 à 155 °C et sous une tension de vapeur autogène correspondante de l'eau jusqu'à l'obtention d'une solution aqueuse de silicate de sodium contenant au moins 20 et, au maximum, 30 % en poids de $SiO_2$,

b) on ajoute ensuite la lessive fluide en une quantité calculée de telle sorte que l'on obtienne, dans le mélange des deux composants, des rapports pondéraux $SiO_2 : Na_2O$ de 1,8 à 2,6 avec une teneur en matières solides dépendant de la concentration de la lessive fluide,

c) au cours d'une deuxième étape de dissolution, on dissout ensuite, dans ce mélange, une quantité supplémentaire de verre solide de silicate de sodium jusqu'à ce qu'on atteigne une concentration d'au moins 23 % de $SiO_2$ en solution.